# EUROPEAN PATENT SPECIFICATION

(11) **EP 4 020 156 B1**
(45) Date of publication and mention of the grant of the patent: **16.10.2024**
(21) Application number: 21197114.8
(22) Date of filing: 16.09.2021
(51) Int. Cl.: G06F 3/06, G06F 21/53, H04L 9/08, G06F 9/455

(54) **REDUCING LATENCY OF HARDWARE TRUSTED EXECUTION ENVIRONMENTS**
VERRINGERUNG DER LATENZZEIT VON HARDWARE-UNTERSTÜTZTEN AUSFÜHRUNGSUMGEBUNGEN
RÉDUCTION DE LA LATENCE D'ENVIRONNEMENTS D'EXÉCUTION SÉCURISÉS PAR MATÉRIEL

(30) Priority: 22.12.2020 US 202017131716
(43) Date of publication of application: 29.06.2022
(60) Divisional application: 22202941.5
(73) Proprietor: INTEL Corporation, Santa Clara, CA 95054 (US)
(72) Inventor: SAHITA, Ravi, Portland, 97229 (US); MCKEEN, Francis, Portland, 97229 (US); VIJ, Mona, Hillsboro, 97124-5961 (US); SCARLATA, Vincent, Beaverton, 97006 (US); ZMUDZINSKI, Krystof, Forest Grove, 97116 (US); ILLIKKAL, Rameshkumar, Folsom, 95630 (US); KRISHNAKUMAR, Sudha, Portland, 97229 (US); STEINER, Michael, Portland, 97201 (US); KNAUTH, Thomas, Hillsboro, 97124 (US); KUVAISKII, Dmitrii, 82024 Taufkirchen (DE); VAHLDIEK-OBERWAGNER, Anjo Lucas, Portland, 97229 (US)
(74) Representative: Viering, Jentschura & Partner mbB Patent- und Rechtsanwälte

(56) References cited:
- US-A1- 2018 330 078
- FRITZ ALDER ET AL: "S-FaaS: Trustworthy and Accountable Function-as-a-Service using Intel SGX", ARXIV.ORG, CORNELL UNIVERSITY LIBRARY, 201 OLIN LIBRARY CORNELL UNIVERSITY ITHACA, NY 14853, 14 October 2018 (2018-10-14), XP081662510, DOI: 10.1145/3338466.3358916

## Description

### TECHNICAL FIELD

The subject matter disclosed herein generally relates to hardware trusted execution environments (TEEs). Specifically, the present disclosure addresses systems and methods for reducing latency of hardware TEEs.

### BACKGROUND

Hardware privilege levels may be used by a processor to limit memory access by applications running on a device. An operating system runs at a higher privilege level and can access all memory of the device and define memory ranges for other applications. The applications, running a lower privilege level, are restricted to accessing memory within the range defined by the operating system and are not able to access the memory of other applications or the operating system. However, an application has no protection from a malicious or compromised operating system.

A TEE is enabled by processor protections that guarantee that code and data loaded inside the TEE is protected from access by code executing outside of the TEE. Thus, the TEE provides an isolated execution environment that prevents, at the hardware level, access of the data and code contained in the TEE from malicious software, including the operating system.

FRITZ ALDER ET AL: "S-FaaS: Thrustworthy and Accountable Function-as-a-Service using Intel SGX", ARXIV ORG, CORNELL UNIVERSITY LIBRARY, 201 OLUN LIBRARY CORNELL UNIVERSITY ITHACA, NY 14853, 14 October 2018, XP081662510, DOI: 10.1145/3338466.3358916 discloses an architecture and implementation of Function-as-a-Service (FaaS) to provide strong security and accountability guarantees backed by Intel SGX with introduction of a new key distribution enclave and a transitive attestation protocol.

US 2018/0330078 A1 discloses forming of an enclave pool including a plurality of enclaves. Each enclave may have a private enclave key and a public enclave key. A shared enclave pool key may be generated from or otherwise based on the public enclave key of each enclave of the enclave pool.

### BRIEF DESCRIPTION OF THE DRAWINGS

Some embodiments are illustrated by way of example and not limitation in the figures of the accompanying drawings.
FIG. 1 is a network diagram illustrating a network environment suitable for servers providing functions as a service using TEEs, according to some example embodiments.
FIG. 2 is a block diagram of a function-as-a-service server, according to some example embodiments, suitable for reducing latency of TEEs according to some example embodiments.
FIG. 3 is a block diagram of prior art ring-based memory protection.
FIG. 4 is a block diagram of enclave-based memory protection, suitable for reducing latency of TEEs according to some example embodiments.
FIG. 5 is a block diagram of a database schema, according to some example embodiments, suitable for use in reducing latency of TEEs.
FIG. 6 is a block diagram of a sequence of operations performed in building a TEE, according to some example embodiments.
FIG. 7 is a flowchart illustrating operations of a method suitable for initializing and providing access to TEEs, according to some example embodiments.
FIG. 8 is a flowchart illustrating operations of a method suitable for initializing and providing access to TEEs, according to some example embodiments.
FIG. 9 is a flowchart illustrating operations of a method suitable for initializing and providing access to TEEs, according to some example embodiments.
FIG. 10 is a block diagram showing one example of a software architecture for a computing device.
FIG. 11 is a block diagram of a machine in the example form of a computer system within which instructions may be executed for causing the machine to perform any one or more of the methodologies discussed herein.

### DETAILED DESCRIPTION

The invention is defined by the attached independent claims. Different embodiments are described by the dependent claims. Example methods and systems are directed to reducing latency in providing TEEs. In the most general sense, a TEE is any trusted execution environment, regardless of how that trust is obtained. However, as used herein, TEEs are provided by executing code within a portion of memory protected from access by processes outside of the TEE, even if those processes are running at an elevated privilege level. Example TEEs include enclaves created by Intel^{®} Software Guard Extensions (SGX) and trust domains created by Intel^{®} Trust Domain Extensions (TDX).

TEEs may be used to enable the secure handling of confidential information by protecting the confidential information from all software outside of the TEE. TEEs may also be used for modular programming, wherein each module contains everything necessary for its own functionality without being exposed to vulnerabilities caused by other modules. For example, a code injection attack that is successful against one TEE cannot impact the code of another TEE.

Total memory encryption (TME) protects data in memory from being accessed by bypassing a processor. The system generates an encryption key within the processor on boot and never stores the key outside of the processor. The TME encryption key is an ephemeral key because it does not persist across reboots and is never stored outside of the processor. All data written by the processor to memory is encrypted using the encryption key and decrypted when it is read back from memory. Thus, a hardware-based attack that attempts to read data directly from memory without processor intermediation will fail.

Multi-key TME (MKTME) extends TME to make use of multiple keys. Individual memory pages may be encrypted using the ephemeral key of TME or using software-provided keys. This may provide increased security over TME with respect to software-based attacks, since an attacker will need to identify the particular key being used by targeted software rather than having the processor automatically decrypt any memory that the attack software has gained access to.

Initializing a TEE requires multiple steps before the TEE can begin executing, causing latency in applications that repeatedly create and destroy TEEs. Besides workload-specific initialization, workload-independent initialization is performed, such as adding memory to the enclave. In function-as-a-service (FaaS) environments, a large portion of the TEE is workload-independent, and thus can be performed prior to receiving the workload.

FaaS platforms provide cloud computing services that execute application logic but do not store data. By contrast with platform-as-a-service (PaaS) hosting providers, FaaS platforms do not have a constantly running server process. As a result, an initial request to a FaaS platform may take longer to handle than an equivalent request to a PaaS host, but at the advantage of reduced idle time and higher scalability. Reducing the latency of handling the initial request, as described herein, improves the attractiveness of the FaaS solution.

Certain steps performed during enclave initialization are identical for certain classes of workloads. For example, each enclave in a class may use heap memory. Thus, the common parts of the enclave initialization sequence (e.g., adding heap memory) may be performed before the enclave is requested. When an enclave is requested for a workload in the class and the parts to specialize the enclave for its particular purpose are known, the final steps to initialize the enclave are performed. This reduces latency over performing all initialization steps in response to a request for an enclave.

A TEE may be initialized ahead of time for a particular workload. The TEE is considered to be a template TEE. When a TEE for the workload is requested, the template TEE is forked, and the new copy is provided as the requested TEE. Since forking an existing TEE is faster than creating a new TEE from scratch, latency is reduced.

A TEE may be initialized ahead of time for a particular workload and marked read-only. The TEE is considered to be a template TEE. When a TEE for the workload is requested, a new TEE is created with read-only access to the template TEE. Multiple TEEs may have access to the template TEE safely, so long as the template TEE is read-only. Since creation of the new TEE with access to the template TEE is faster than creating a new TEE with all of the code and data of the template TEE from scratch, latency is reduced.

In some example embodiments, as described herein, a FaaS image is used to create a TEE using an ephemeral key. When a TEE for the FaaS is requested, the ephemeral key is assigned an access-controlled key identifier, allowing for rapid provisioning of the TEE in response.

By comparison with existing methods of initializing enclaves, the methods and systems discussed herein reduce latency. The reduction of latency may allow additional functionality to be protected in TEEs, for finer-grained TEEs to be used, or both, increasing system security. When these effects are considered in the aggregate, one or more of the methodologies described herein may obviate a need for certain efforts or resources that otherwise would be involved in initializing TEEs. Computing resources used by one or more machines, databases, or networks may similarly be reduced. Examples of such computing resources include processor cycles, network traffic, memory usage, data storage capacity, power consumption, and cooling capacity.

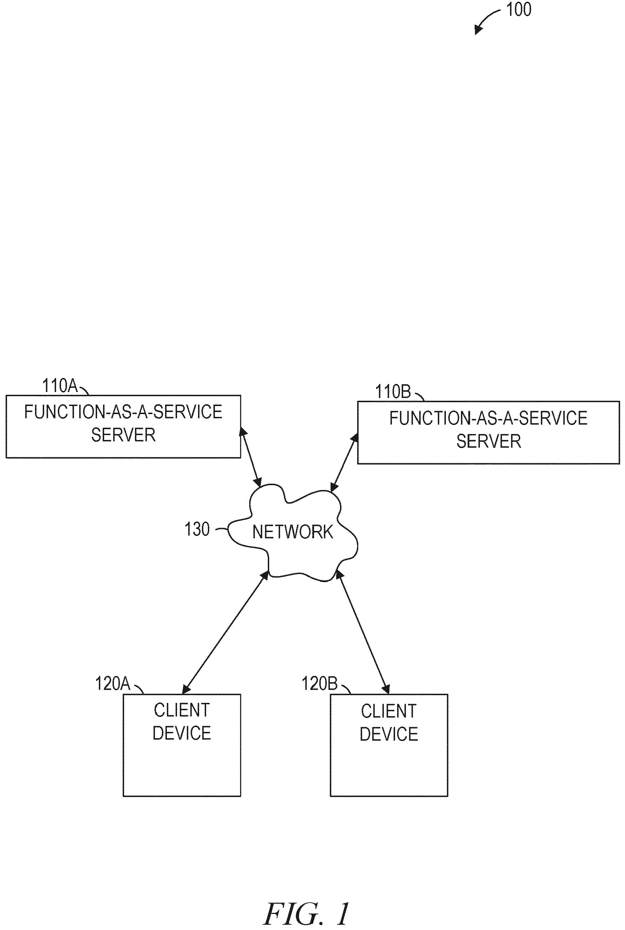

FIG. 1 is a network diagram illustrating a network environment 100 suitable for servers providing functions as a service using TEEs, according to some example embodiments. The network environment 100 includes FaaS servers 110A and 110B, client devices 120A and 120B, and a network 130. The FaaS servers 110A-110B provide functions to client devices 120A-120B via the network 130. The client devices 120A and 120B may be devices of different tenants, such that each tenant wants to ensure that their tenant-specific data and code is not accessible by other tenants. Accordingly, the FaaS servers 110A-110B may use an enclave for each FaaS provided.

To reduce latency in providing functions, systems and methods described herein to reduce latency in TEE creation may be used. For example, a TEE for a function may be partially or wholly created by a FaaS server 110 prior to the function being requested by a client device 120.

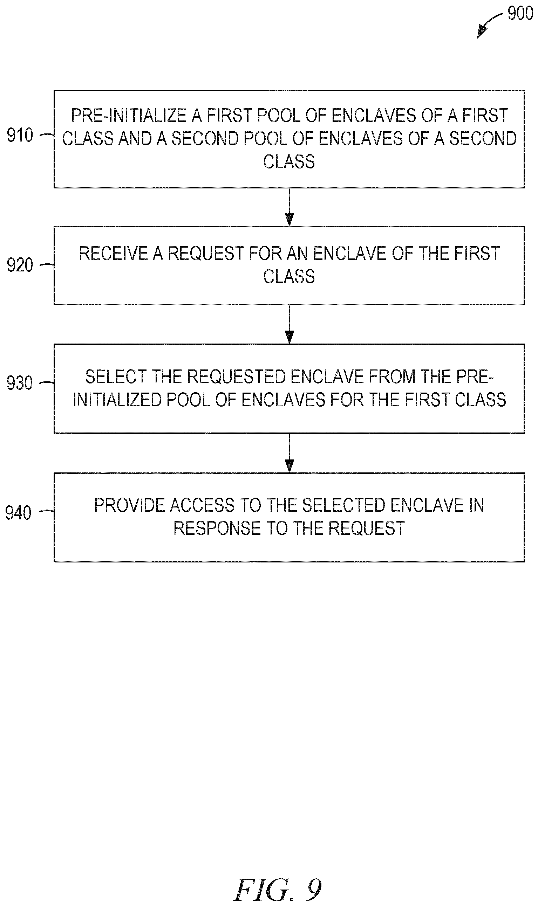

The FaaS servers 110A-110B and the client devices 120A and 120B may each be implemented in a computer system, in whole or in part, as described below with respect to FIG. 9. The FaaS servers 110A and 110B may be referred to collectively as FaaS servers 110 or generically as a FaaS server 110. The client devices 120A and 120B may be referred to collectively as client devices 120 or generically as a client device 120.

Any of the machines, databases, or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 9. As used herein, a "database" is a data storage resource and may store data structured as a text file, a table, a spreadsheet, a relational database (e.g., an object-relational database), a triple store, a hierarchical data store, a document-oriented NoSQL database, a file store, or any suitable combination thereof. The database may be an in-memory database. Moreover, any two or more of the machines, databases, or devices illustrated in FIG. 1 may be combined into a single machine, database, or device, and the functions described herein for any single machine, database, or device may be subdivided among multiple machines, databases, or devices.

The FaaS servers 110 and the client devices 120 are connected by the network 130. The network 130 may be any network that enables communication between or among machines, databases, and devices. Accordingly, the network 130 may be a wired network, a wireless network (e.g., a mobile or cellular network), or any suitable combination thereof. The network 130 may include one or more portions that constitute a private network, a public network (e.g., the Internet), or any suitable combination thereof.

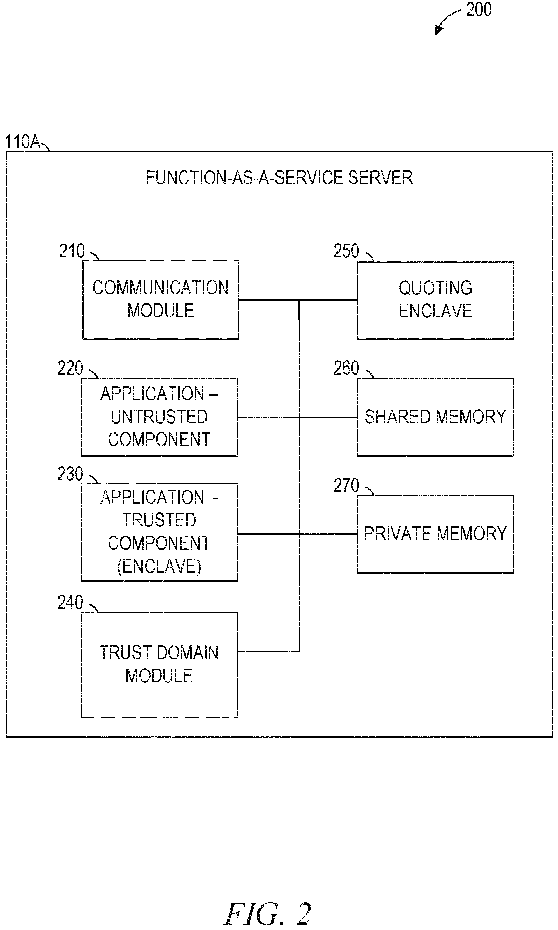

FIG. 2 is a block diagram of the FaaS server 110A, according to some example embodiments, suitable for reducing latency of TEEs according to some example embodiments. The FaaS server 110A is shown as including a communication module 210, an untrusted component 220 of an application, a trusted component 230 of an application, a trust domain module 240, a quoting enclave 250, a shared memory 260, and a private memory 270, all configured to communicate with each other (e.g., via a bus, shared memory, or a switch). Any one or more of the modules described herein may be implemented using hardware (e.g., a processor of a machine). For example, any module described herein may be implemented by a processor configured to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

The communication module 210 receives data sent to the FaaS server 110A and transmits data from the FaaS server 110A. For example, the communication module 210 may receive, from the client device 120A, a request to perform a function. After the function is performed, the results of the function are provided by the communication module 210 to the client device 120A. Communications sent and received by the communication module 210 may be intermediated by the network 130.

The untrusted component 220 executes outside of an enclave. Thus, if the operating system or other untrusted components are compromised, the untrusted component 220 is vulnerable to attack. The trusted component 230 executes within an enclave. Thus, even if the operating system or the untrusted component 220 is compromised, the data and code of the trusted component 230 remains secure.

The trust domain module 240 creates and protects enclaves and is responsible for transitioning execution between the untrusted component 220 and the trusted component 230. Signed code may be provided to the trust domain module 240, which verifies that the code has not been modified since it was signed. The signed code is loaded into a portion of physical memory that is marked as being part of an enclave. Thereafter, hardware protections prevent access, modification, execution, or any suitable combination thereof of the enclave memory by untrusted software. The code may be encrypted using a key only available to the trust domain module 240.

Once the trusted component 230 is initialized, the untrusted component 220 can invoke functions of the trusted component 230 using special processor instructions of the trust domain module 240 that transition from an untrusted mode to a trusted mode. The trusted component 230 performs parameter verification, performs the requested function if the parameters are valid, and returns control to the untrusted component 220 via the trust domain module 240.

The trust domain module 240 may be implemented as one or more components of an Intel^{®} hardware processor providing Intel^{®} SGX, Intel^{®} TDX, AMD^{®} secure encrypted virtualization (SEV), ARM^{®} TrustZone, or any suitable combination thereof. In Intel^{®} SGX, attestation is the mechanism by which a third entity establishes that a software entity is running on an Intel^{®} SGX enabled platform protected within an enclave prior to provisioning that software with secrets and protected data. Attestation relies on the ability of a platform to produce a credential that accurately reflects the signature of an enclave, which includes information on the enclave's security properties. The Intel^{®} SGX architecture provides the mechanisms to support two forms of attestation. There is a mechanism for creating a basic assertion between enclaves running on the same platform, which supports local, or intra-platform attestation, and then another mechanism that provides the foundation for attestation between an enclave and a remote third party.

The quoting enclave 250 generates attestation for enclaves (e.g., the trusted component 230). The attestation is an evidence structure that uniquely identifies the attested enclave and the host (e.g., the FaaS server 110A), using asymmetric encryption and supported by built-in processor functions. The attestation may be provided to a client device 120 via the communication module 210, allowing the client device 120 to confirm that the trusted component 230 has not been compromised. For example, the processor may be manufactured with a built-in private key using hardware that prevents access of the key. Using this private key, the attestation structure can be signed by the processor and, using a corresponding public key published by the hardware manufacturer, the signature can be confirmed by the client device 120. This allows the client device 120 to ensure that the enclave on the remote device (e.g., the FaaS server 110A) has actually been created without being tampered with.

Both the untrusted component 220 and the trusted component 230 can access and modify the shared memory 260, but only the trusted component 230 can access and modify the private memory 270. Though only one untrusted component 220, one trusted component 230, and one private memory 270 are shown in FIG. 2, each application may have multiple trusted components 230, each with a corresponding private memory 270, and multiple untrusted components 220, without access to any of the private memories 270. Additionally, multiple applications may be run with separate memory spaces, and thus separate shared memories 260. In this context "shared" refers to the memory being accessible by all software and hardware with access to the memory space (e.g., an application and its operating system) not necessarily being accessible by all applications running on the system.

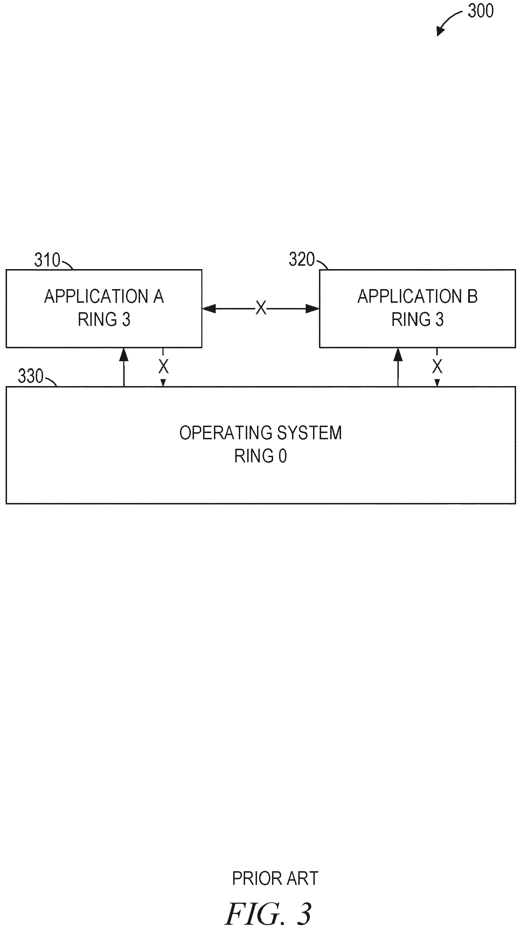

FIG. 3 is a block diagram 300 of prior art ring-based memory protection. The block diagram 300 includes applications 310 and 320 and an operating system 330. The operating system 330 executes processor commands in ring 0 (Intel^{®} and AMD^{®} processors), exception level 1 (ARM^{®} processors), or an equivalent privilege level. The applications 310-320 execute processor commands in ring 3 (Intel^{®} and AMD^{®} processors), exception level 0 (ARM^{®} processors), or an equivalent privilege level.

The hardware processor prevents code that is executing at the lower privilege level from accessing memory outside of the memory range defined by the operating system. Thus, the code of the application 310 cannot directly access the memory of the operating system 330 or the application 320 (as shown by the "X" in FIG. 3). The operating system 330 exposes some functionality to the applications 310-320 by predefining specific access points (e.g., by call gates, SYSENTER/SYSEXIT instructions on Intel^{®} processors, SYSCALL/SYSRET instructions on AMD^{®} processors, or any suitable combination or equivalent thereof).

Since the operating system 330 has access to all of memory, the applications 310 and 320 have no protection from a malicious operating system. For example, a competitor may modify the operating system before running the application 310 in order to gain access to the code and data of the application 310, permitting reverse engineering.

Additionally, if an application is able to exploit a vulnerability in the operating system 330 and promote itself to the privilege level of the operating system, the application would be able to access all of memory. For example, the application 310, which is not normally able to access the memory of the application 320 (as shown by the X between the applications 310 and 320 in FIG. 3), would be able to access the memory of the application 320 after promoting itself to ring 0 or exception level 1. Thus, if the user is tricked into running a malicious program (e.g., the application 310), private data of the user or an application provider may be accessed directly from memory (e.g., a banking password used by the application 320).

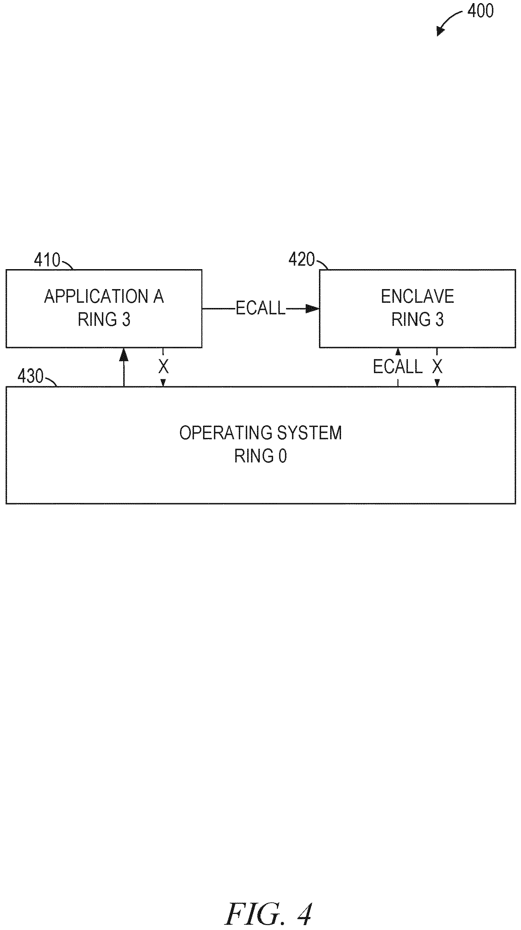

FIG. 4 is a block diagram 400 of enclave-based memory protection, suitable for reducing latency of TEEs according to some example embodiments. The block diagram 400 includes an application 410, an enclave 420, and an operating system 430. The operating system 430 executes processor commands in ring 0 (Intel^{®} and AMD^{®} processors), exception level 1 (ARM^{®} processors), or an equivalent privilege level. The application 410 and the enclave 420 execute processor commands in ring 3 (Intel^{®} and AMD^{®} processors), exception level 0 (ARM^{®} processors), or an equivalent privilege level.

The operating system 430 allocates the memory of the enclave 420 and indicates to the processor the code and data to be loaded into the enclave 420. However, once instantiated, the operating system 430 does not have access to the memory of the enclave 420. Thus, even if the operating system 430 is malicious or compromised, the code and data of the enclave 420 remains secure.

The enclave 420 may provide functionality to the application 410. The operating system 430 may control whether the application 410 is permitted to invoke functions of the enclave 420 (e.g., by using an ECALL instruction). Thus, a malicious application may be able to gain the ability to invoke functions of the enclave 420 by compromising the operating system 430. Nonetheless, the hardware processor will prevent the malicious application from directly accessing the memory or code of the enclave 420. Thus, while the code in the enclave 420 cannot assume that functions are being invoked correctly or by a non-attacker, the code in the enclave 420 has full control over parameter checking and other internal security measures and is only subject to its internal security vulnerabilities.

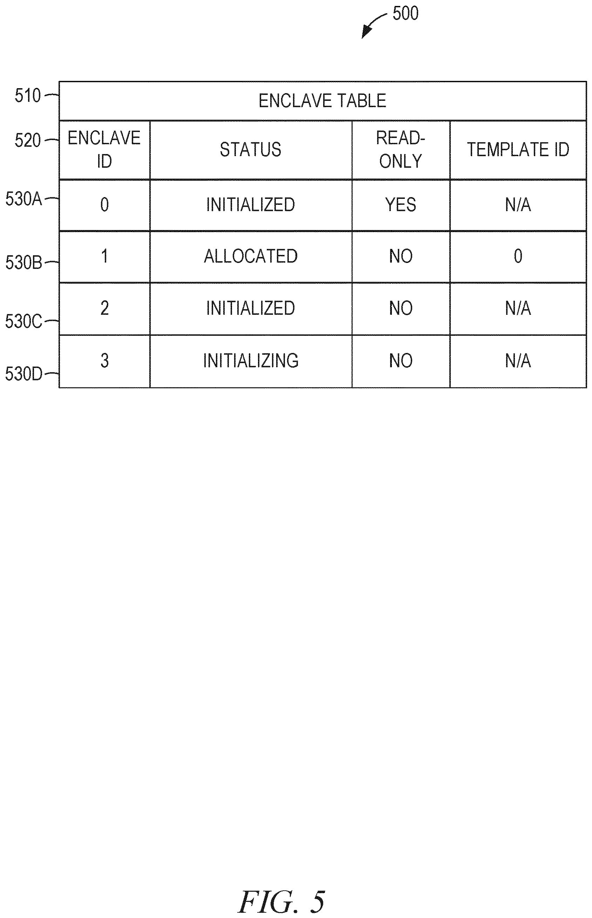

FIG. 5 is a block diagram of a database schema, according to some example embodiments, suitable for use in reducing latency of TEEs. The database schema 500 includes an enclave table 510. The enclave table 510 includes rows 530A, 530B, 530C, and 530D of a format 520.

The format 520 of the enclave table 510 includes an enclave identifier field, a status field, a read-only field, and a template identifier field. Each of the rows 530A-530D stores data for a single enclave. The enclave identifier is a unique identifier for the enclave. For example, when an enclave is created, the trust domain module 240 may assign the next unused identifier to the created enclave. The status field indicates the status of the enclave, such as initializing (created but not yet ready for use), initialized (ready for use but not yet in use), and allocated (in use). The read-only field indicates whether the enclave is read-only or not. The template identifier field contains the enclave identifier of another enclave that this enclave has read-only access to.

Thus, in the example of FIG. 5, four enclaves are shown in the enclave table 510. One of the enclaves is initializing, two are initialized, and one is allocated. Enclave 0, of the row 530A, is a read-only enclave and is used as a template for enclave 1, of the row 530B. Thus, the processor prevents enclave 0 from being executed but enclave 1 has access to the data and code of enclave 0. Additional enclaves may be created that also use enclave 0 as a template, allowing multiple enclaves to access the data and code of enclave 0 without multiplying the amount of memory consumed. Enclaves 1-3, of the rows 530B-530D, are not read-only, and thus can be executed.

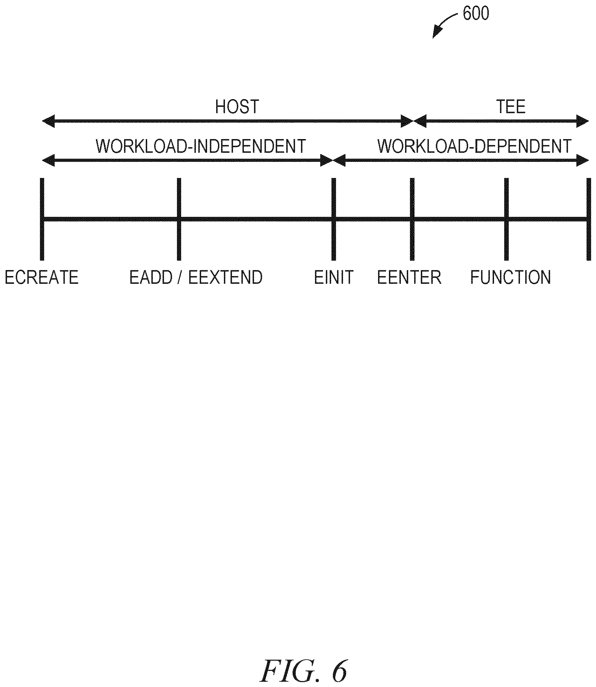

FIG. 6 is a block diagram 600 of a sequence of operations performed by the trust domain module 240 in building a TEE, according to some example embodiments. As shown in FIG. 6, the sequence of operations includes ECREATE, EADD / EEXTEND, EINIT, EENTER, and FUNCTION START. The ECREATE operation creates the enclave. The EADD operation adds initial heap memory to the enclave. Additional memory may be added using the EEXTEND operation. The EINIT operation initializes the TEE for execution. Thereafter, the untrusted component 220 transfers execution to the TEE by requesting the trust domain module 240 to perform the EENTER operation. The trusted FUNCTION of the TEE is performed, in response to the FUNCTION START CALL, by executing the code within the TEE.

As shown in FIG. 6, the operations may be divided in at least two ways. One division shows that the ECREATE, EADD / EEXTEND, and EINIT operations are performed by the host application (e.g., the untrusted component 220) and the EENTER operation transfers control to the TEE, which performs the FUNCTION. Another division shows that the creation of the TEE and the allocation of heap memory for the TEE can be performed regardless of the particular code and data to be added to the TEE ("workload-independent operations") while the initialization of the TEE and subsequent invocation of a TEE function depend on the particular code and data that are loaded ("workload-dependent operations").

A pool of TEEs may be pre-initialized by performing the workload-independent operations before the TEEs are requested. As used herein, a pre-initialized TEE is a TEE for which at least one operation was initiated before the TEE is requested by an application. For example, the TEE may be created by the ECREATE operation before the TEE is requested. In response to receiving a request for a TEE, the workload-dependent operations are performed. By comparison with solutions that do not perform the workload-independent operations before the request is received, the latency is reduced. In some example embodiments, operations for pre-initialization of a TEE are performed in parallel with receiving the request for the TEE. For example, the ECREATE operation for the TEE may begin and, before the ECREATE operation completes, the request for the TEE is received. Thus, the pre-initialization is not defined by completing the workload-independent operations a particular amount of time before the request for the TEE is received, but by beginning the workload-independent operations before the request for the TEE is received.

For a FaaS environment, each function may share a common runtime environment that is workload independent and is initialized before the workload-dependent operations are performed. The startup time of a FaaS function is an important metric in FaaS services, since shorter startup times allow for higher elasticity of the service.

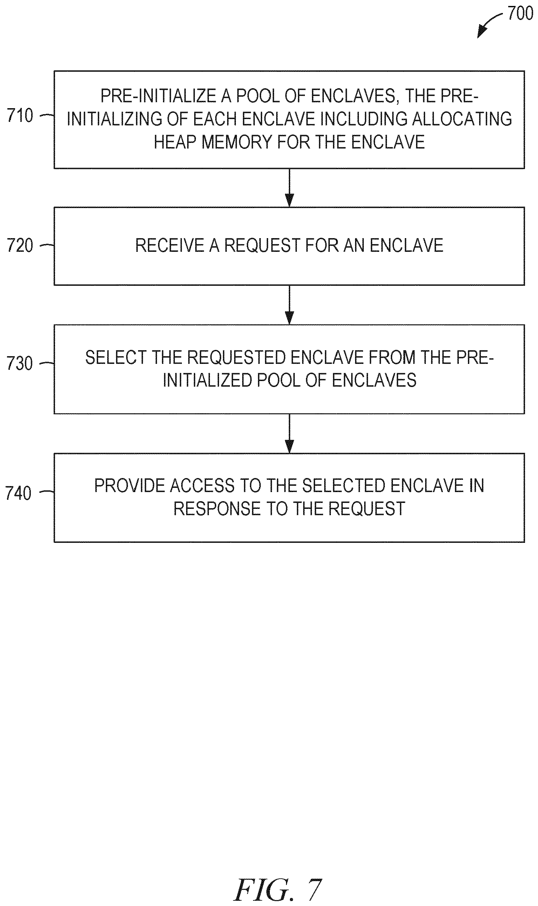

FIG. 7 is a flowchart illustrating operations of a method 700 suitable for initializing and providing access to TEEs, according to some example embodiments. The method 700 includes operations 710, 720, 730, and 740. By way of example and not limitation, the method 700 may be performed by the FaaS server 110A of FIG. 1, using the modules, databases, and structures shown in FIGS. 2-4.

In operation 710, the trust domain module 240 pre-initializes a pool of enclaves. For example, the operations of creating the enclave and allocating heap memory to the enclave may be performed for each enclave in the pool of enclaves. In some example embodiments, the pool of enclaves includes 16-512 enclaves, 16 enclaves, 32 enclaves, or 128 enclaves.

In various example embodiments, the enclaves in the pool of enclaves are partially pre-initialized or fully pre-initialized. A fully pre-initialized enclave has at least one of the workload-specific operations performed before the enclave is requested. A partially pre-initialized enclave has only the workload-independent operations performed before the enclave is requested. Pre-initialized enclaves reduce the time-to-result for any enclave, but they are particularly valuable for short-lived ephemeral enclaves (e.g., FaaS workloads) where the initialization overhead dominates the overall execution time.

The pre-initialized enclaves may be created by forking or copying a template enclave. The template enclave is created first, with the desired state of the pre-initialized enclaves. Then the template enclave is forked or copied for each of the pre-initialized enclaves in the pool. In some example embodiments, the template enclave is itself part of the pool. In other example embodiments, the template enclave is read-only, not executable, and retained as a template for later use. The template enclave may include memory contents and layout for a FaaS.

Each enclave in the pool of enclaves may have its memory encrypted using a key stored in the processor. The key may be an ephemeral key (e.g., the TME ephemeral key) or a key with a key identifier that is accessible outside of the processor. The trust domain module 240 or an MKTME module may generate the key and assign it to the enclave. Thus, the key itself is never exposed outside of the processor. The enclave is assigned a portion of physical memory. Memory access requests originating from the physical memory of the enclave are associated with the key identifier, and thus the key, of the enclave. The processor does not apply the key of the enclave to memory accesses that originate from outside the physical memory of the enclave. As a result, memory accesses by untrusted applications or components (e.g., the untrusted component 220) can receive only the encrypted data or code of the enclave.

In some example embodiments, a different ephemeral key without a key identifier (e.g., an MKTME key) is used to encrypt each enclave in the pool of enclaves. Thereafter, when an enclave for the FaaS is requested, the ephemeral key is assigned an access-controlled key identifier by the trust domain module 240, allowing for rapid provisioning of the enclave in response.

The trust domain module 240, in operation 720, receives a request for an enclave. For example, the untrusted component 220 of an application may provide data identifying an enclave to the trust domain module 240 as part of the request. The data identifying the enclave may include a pointer to an address in the shared memory 260, accessible by the untrusted component 220.

The request may include a pre-computed hash value for the enclave and indicate a portion of the shared memory 260 (e.g., a portion identified by an address and a size included in the request) that contains the code and data for the enclave. The trust domain module 240 may perform a hash function on a binary memory state (e.g., the portion of the shared memory 260 indicated in the request) to confirm that the hash value provided in the request matches the computed hash value. If the hash values match, the trust domain module 240 has confirmed that the indicated memory actually contains the code and data of the requested enclave and the method 700 may proceed. If the hash values don't match, the trust domain module 240 may return an error value, preventing the modified memory from being loaded into the enclave.

In some example embodiments, the request includes an identifier of a template enclave. The trust domain module 240 creates the requested enclave with read-only permissions to access the template enclave. This allows the requested enclave to read data of the template enclave and execute functions of the template enclave without modifying the data or code of the template enclave. Accordingly, multiple enclaves may access the template enclave without conflict and the data and code of the template enclave is stored only once (rather than once for each of the multiple enclaves). As a result, less memory is copied during creation of the accessing enclaves, reducing latency.

In operation 730, in response to the received request, the trust domain module 240 selects an enclave from the pre-initialized pool of enclaves. The trust domain module 240 may modify the selected enclave by performing, based on the data identifying the enclave received with the request, additional operations on the selected enclave, such as the workload-specific operations shown in FIG. 4. The additional operations may include copying data or code from the address in the shared memory 260 indicated in the request to the private memory 270 allocated to the enclave.

In some example embodiments, the additional operations include re-encrypting the physical memory assigned to the enclave with a new key. For example, the pre-initialization step may have encrypted the physical memory of the enclave using an ephemeral key and the enclave may be re-encrypted using a unique key for the enclave, with a corresponding unique key identifier. In systems in which the key identifiers are a finite resource (e.g., with a fixed number of key identifiers available), using the ephemeral key for the pre-initialized enclaves may increase the maximum size of the pool of enclaves (e.g., to a size above the fixed number of available key identifiers). The additional operations may also include creating a secure extended page table (EPT) branch for the selected TEE that derives code mappings from the template TEE.

The trust domain module 240 provides access to the selected enclave in response to the request (operation 740). For example, a unique identifier of the initialized enclave may be returned, usable as a parameter for a later request (e.g., an EENTER command) to the trust domain module 240 to execute a function within the enclave.

Thereafter, the trust domain module 240 may determine that execution of the selected enclave is complete (e.g., in response to receiving an enclave exit instruction). The memory assigned to the completed enclave may be released. Alternatively, the state of the completed enclave may be restored to the pre-initialized state and the enclave may be returned to the pool. For example, the template enclave may be copied over the enclave, operations to reverse the workload-specific operations may be performed, a checkpoint of the enclave performed before the workload-specific operations are performed, and a restore of the checkpoint performed after execution is complete, or any suitable combination thereof.

By comparison with prior art implementations that do not perform the pre-initialization of the enclave (operation 710) before receiving the request for the enclave (operation 720), the delay between the receiving of the request and the providing of access (operation 740) is reduced. The reduction of latency may allow additional functionality to be protected in enclaves, for finer-grained enclaves to be used, or both, increasing system security. Additionally, when the enclave is invoked over the network 130 by a client device 120, processor cycles of the client device 120 that are used while waiting for a response from the FaaS server 110 are reduced, improving responsiveness and reducing power consumption.

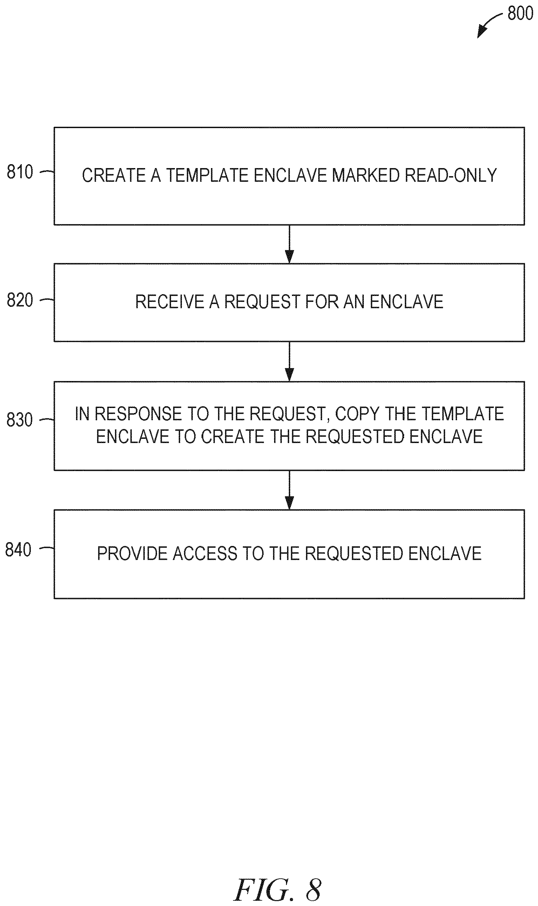

FIG. 8 is a flowchart illustrating operations of a method 800 suitable for initializing and providing access to TEEs, according to some example embodiments. The method 800 includes operations 810, 820, 830, and 840. By way of example and not limitation, the method 800 may be performed by the FaaS server 110A of FIG. 1, using the modules, databases, and structures shown in FIGS. 2-4.

In operation 810, the trust domain module 240 creates a template enclave marked read-only. For example, the enclave may be fully created, with code and data loaded into the private memory 270. However, since the template enclave is read-only, functions of the template enclave cannot be directly invoked from the untrusted component 220. With reference to the enclave table 310 of FIG. 3, the row 330A shows a read-only template enclave.

The trust domain module 240, in operation 820, receives a request for an enclave. For example, the untrusted component 220 of an application may provide data identifying an enclave to the trust domain module 240 as part of the request. The data identifying the enclave may include a pointer to an address in the shared memory 260, accessible by the untrusted component 220.

In operation 830, in response to the received request, the trust domain module 240 copies the template enclave to create the requested enclave. For example, the trust domain module 240 may determine that the data identifying the enclave indicates that the requested enclave is for the same code and data as the template enclave. The determination may be based on a signature of the enclave code and data, a message authentication code (MAC) of the enclave code and data, asymmetric encryption, or any suitable combination thereof.

The trust domain module 240 provides access to the selected enclave in response to the request (operation 840). For example, a unique identifier of the initialized enclave may be returned, usable as a parameter to a later request (e.g., an EENTER command) to the trust domain module 240 to execute a function within the enclave.

By comparison with prior art implementations that create the enclave in response to receiving the request for the enclave (operation 820) instead of copying the template enclave to create the requested enclave (operation 830), the delay between the receiving of the request and the providing of access (operation 840) is reduced. The reduction of latency may allow additional functionality to be protected in enclaves, for finer-grained enclaves to be used, or both, increasing system security. Additionally, when the enclave is invoked over the network 130 by a client device 120, processor cycles of the client device 120 that are used while waiting for a response from the FaaS server 110 are reduced, improving responsiveness and reducing power consumption.

FIG. 9 is a flowchart illustrating operations of a method 900 suitable for initializing and providing access to TEEs, according to some example embodiments. The method 900 includes operations 910, 920, 930, and 940. By way of example and not limitation, the method 900 may be performed by the FaaS server 110A of FIG. 1, using the modules, databases, and structures shown in FIGS. 2-4.

In operation 910, the trust domain module 240 pre-initializes a first pool of enclaves of a first class and a second pool of enclaves of a second class. The pre-initializing is either complete or partial. For complete initialization, the enclaves in the pool are fully prepared for use and already loaded with the code and data of the enclave. Thus, all members of the class are identical. For partial initialization, the enclaves in the pool share one or more characteristics, such as the amount of heap memory used. The enclaves are initialized with respect to the shared characteristics, but the actual code and data of the enclave is not loaded during pre-initialization. Additionally, further customization may be performed at a later step. Accordingly, different enclaves may be members of the class when partial initialization is performed.

The trust domain module 240, in operation 920, receives a request for an enclave of the first class. For example, the untrusted component 220 of an application may provide data identifying an enclave to the trust domain module 240 as part of the request. The data identifying the enclave may include a pointer to an address in the shared memory 260, accessible by the untrusted component 220. The data identifying the class of the enclave may be included in the enclave or in the request.

In operation 930, in response to the received request, the trust domain module 240 selects an enclave from the pre-initialized pool of enclaves for the first class. The trust domain module 240 may modify the selected enclave by performing, based on the data identifying the enclave received with the request, additional operations on the selected enclave, such as the workload-specific operations shown in FIG. 4. The additional operations may include copying data or code from the address in the shared memory 260 indicated in the request to the private memory 270 allocated to the enclave.

The trust domain module 240 provides access to the selected enclave in response to the request (operation 940). For example, a unique identifier of the initialized enclave may be returned, usable as a parameter for a later request (e.g., an EENTER command) to the trust domain module 240 to execute a function within the enclave.

By using different pools of different classes, enclaves that are similar but in relatively low demand can be put into a common class for partial pre-initialization, reducing latency while consuming resources only in proportion to their demand. At the same time, enclaves that are in high demand can be fully pre-initialized, reducing latency still further.

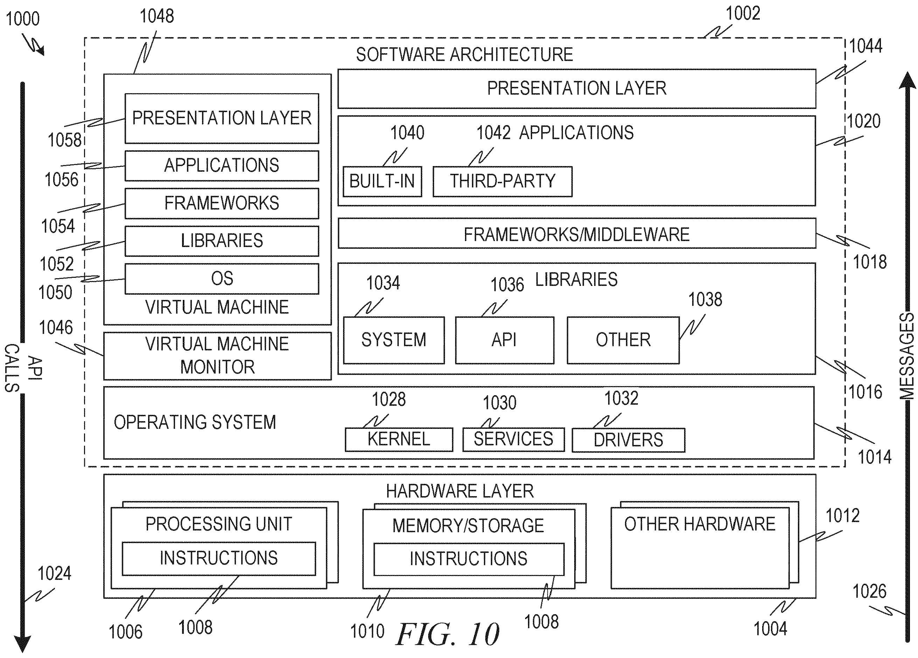

FIG. 10 is a block diagram 1000 showing one example of a software architecture 1002 for a computing device. The architecture 1002 may be used in conjunction with various hardware architectures, for example, as described herein. FIG. 10 is merely a non-limiting example of a software architecture and many other architectures may be implemented to facilitate the functionality described herein. A representative hardware layer 1004 is illustrated and can represent, for example, any of the above referenced computing devices. In some examples, the hardware layer 1004 may be implemented according to the architecture of the computer system of FIG. 10.

The representative hardware layer 1004 comprises one or more processing units 1006 having associated executable instructions 1008. Executable instructions 1008 represent the executable instructions of the software architecture 1002, including implementation of the methods, modules, subsystems, and components, and so forth described herein and may also include memory and/or storage modules 1010, which also have executable instructions 1008. Hardware layer 1004 may also comprise other hardware as indicated by other hardware 1012 which represents any other hardware of the hardware layer 1004, such as the other hardware illustrated as part of the software architecture 1002.

In the example architecture of FIG. 10, the software architecture 1002 may be conceptualized as a stack of layers where each layer provides particular functionality. For example, the software architecture 1002 may include layers such as an operating system 1014, libraries 1016, frameworks/middleware 1018, applications 1020, and presentation layer 1044. Operationally, the applications 1020 and/or other components within the layers may invoke application programming interface (API) calls 1024 through the software stack and access a response, returned values, and so forth illustrated as messages 1026 in response to the API calls 1024. The layers illustrated are representative in nature and not all software architectures have all layers. For example, some mobile or special purpose operating systems may not provide a frameworks/middleware layer 1018, while others may provide such a layer. Other software architectures may include additional or different layers.

The operating system 1014 may manage hardware resources and provide common services. The operating system 1014 may include, for example, a kernel 1028, services 1030, and drivers 1032. The kernel 1028 may act as an abstraction layer between the hardware and the other software layers. For example, the kernel 1028 may be responsible for memory management, processor management (e.g., scheduling), component management, networking, security settings, and so on. The services 1030 may provide other common services for the other software layers. In some examples, the services 1030 include an interrupt service. The interrupt service may detect the receipt of an interrupt and, in response, cause the architecture 1002 to pause its current processing and execute an interrupt service routine (ISR) when an interrupt is accessed.

The drivers 1032 may be responsible for controlling or interfacing with the underlying hardware. For instance, the drivers 1032 may include display drivers, camera drivers, Bluetooth^{®} drivers, flash memory drivers, serial communication drivers (e.g., Universal Serial Bus (USB) drivers), Wi-Fi^{®} drivers, NFC drivers, audio drivers, power management drivers, and so forth depending on the hardware configuration.

The libraries 1016 may provide a common infrastructure that may be utilized by the applications 1020 and/or other components and/or layers. The libraries 1016 typically provide functionality that allows other software modules to perform tasks in an easier fashion than to interface directly with the underlying operating system 1014 functionality (e.g., kernel 1028, services 1030 and/or drivers 1032). The libraries 1016 may include system libraries 1034 (e.g., C standard library) that may provide functions such as memory allocation functions, string manipulation functions, mathematic functions, and the like. In addition, the libraries 1016 may include API libraries 1036 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 1016 may also include a wide variety of other libraries 1038 to provide many other APIs to the applications 1020 and other software components/modules.

The frameworks/middleware 1018 may provide a higher-level common infrastructure that may be utilized by the applications 1020 and/or other software components/modules. For example, the frameworks/middleware 1018 may provide various graphic user interface (GUI) functions, high-level resource management, high-level location services, and so forth. The frameworks/middleware 1018 may provide a broad spectrum of other APIs that may be utilized by the applications 1020 and/or other software components/modules, some of which may be specific to a particular operating system or platform.

The applications 1020 include built-in applications 1040 and/or third-party applications 1042. Examples of representative built-in applications 1040 may include, but are not limited to, a contacts application, a browser application, a book reader application, a location application, a media application, a messaging application, and/or a game application. Third-party applications 1042 may include any of the built-in applications 1040 as well as a broad assortment of other applications. In a specific example, the third-party application 1042 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 1042 may invoke the API calls 1024 provided by the mobile operating system such as operating system 1014 to facilitate functionality described herein.

The applications 1020 may utilize built-in operating system functions (e.g., kernel 1028, services 1030 and/or drivers 1032), libraries (e.g., system libraries 1034, API libraries 1036, and other libraries 1038), frameworks/middleware 1018 to create user interfaces to interact with users of the system. Alternatively, or additionally, in some systems, interactions with a user may occur through a presentation layer, such as presentation layer 1044. In these systems, the application/module "logic" can be separated from the aspects of the application/module that interact with a user.

Some software architectures utilize virtual machines. In the example of FIG. 10, this is illustrated by virtual machine 1048. A virtual machine creates a software environment where applications/modules can execute as if they were executing on a hardware computing device. A virtual machine is hosted by a host operating system (operating system 1014) and typically, although not always, has a virtual machine monitor 1046, which manages the operation of the virtual machine 1048 as well as the interface with the host operating system (i.e., operating system 1014). A software architecture executes within the virtual machine 1048 such as an operating system 1050, libraries 1052, frameworks/middleware 1054, applications 1056 and/or presentation layer 1058. These layers of software architecture executing within the virtual machine 1048 can be the same as corresponding layers previously described or may be different.

### MODULES, COMPONENTS AND LOGIC

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is a tangible unit capable of performing certain operations and may be configured or arranged in a certain manner. In example embodiments, one or more computer systems (e.g., a standalone, client, or server computer system) or one or more hardware processors may be configured by software (e.g., an application or application portion) as a hardware-implemented module that operates to perform certain operations as described herein.

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or another programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

Accordingly, the term "hardware-implemented module" should be understood to encompass a tangible entity, be that an entity that is physically constructed, permanently configured (e.g., hardwired), or temporarily or transitorily configured (e.g., programmed) to operate in a certain manner and/or to perform certain operations described herein. Considering embodiments in which hardware-implemented modules are temporarily configured (e.g., programmed), each of the hardware-implemented modules need not be configured or instantiated at any one instance in time. For example, where the hardware-implemented modules comprise a general-purpose processor configured using software, the general-purpose processor may be configured as respective different hardware-implemented modules at different times. Software may accordingly configure a processor, for example, to constitute a particular hardware-implemented module at one instance of time and to constitute a different hardware-implemented module at a different instance of time.

Hardware-implemented modules can provide information to, and receive information from, other hardware-implemented modules. Accordingly, the described hardware-implemented modules may be regarded as being communicatively coupled. Where multiple of such hardware-implemented modules exist contemporaneously, communications may be achieved through signal transmission (e.g., over appropriate circuits and buses that connect the hardware-implemented modules). In embodiments in which multiple hardware-implemented modules are configured or instantiated at different times, communications between such hardware-implemented modules may be achieved, for example, through the storage and retrieval of information in memory structures to which the multiple hardware-implemented modules have access. For example, one hardware-implemented module may perform an operation, and store the output of that operation in a memory device to which it is communicatively coupled. A further hardware-implemented module may then, at a later time, access the memory device to retrieve and process the stored output. Hardware-implemented modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment, or a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., APIs).

### ELECTRONIC APPARATUS AND SYSTEM

Example embodiments may be implemented in digital electronic circuitry, or in computer hardware, firmware, or software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry, e.g., an FPGA or an ASIC.

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out hardware (e.g., machine) and software architectures that may be deployed, in various example embodiments.

### EXAMPLE MACHINE ARCHITECTURE AND MACHINE-READABLE MEDIUM

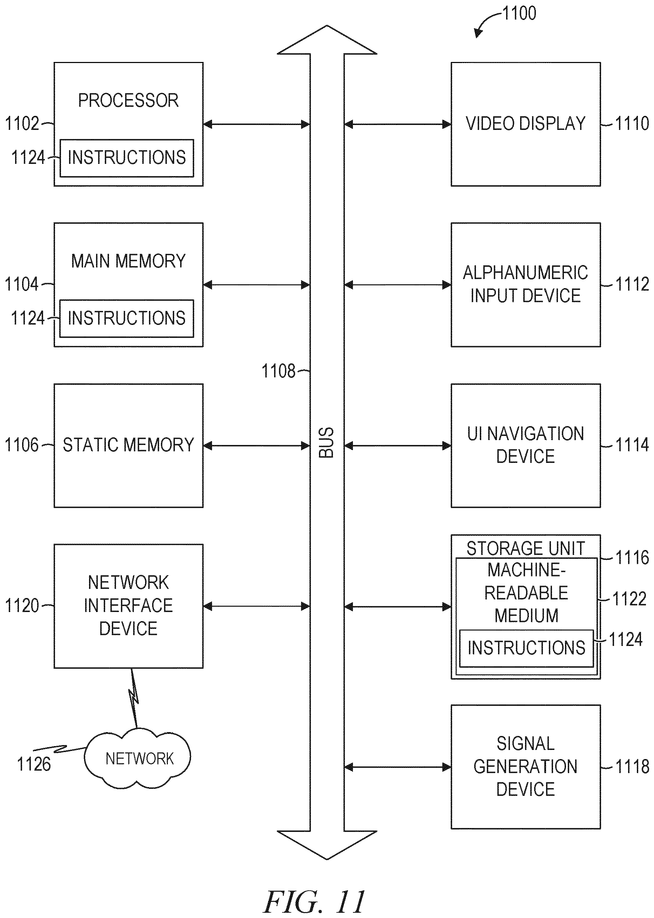

FIG. 11 is a block diagram of a machine in the example form of a computer system 1100 within which instructions 1124 may be executed for causing the machine to perform any one or more of the methodologies discussed herein. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1100 includes a processor 1102 (e.g., a central processing unit (CPU), a graphics processing unit (GPU), or both), a main memory 1104, and a static memory 1106, which communicate with each other via a bus 1108. The computer system 1100 may further include a video display unit 1110 (e.g., a liquid crystal display (LCD) or a cathode ray tube (CRT)). The computer system 1100 also includes an alphanumeric input device 1112 (e.g., a keyboard or a touch-sensitive display screen), a user interface (UI) navigation (or cursor control) device 1114 (e.g., a mouse), a storage unit 1116, a signal generation device 1118 (e.g., a speaker), and a network interface device 1120.

### MACHINE-READABLE MEDIUM

The storage unit 1116 includes a machine-readable medium 1122 on which is stored one or more sets of data structures and instructions 1124 (e.g., software) embodying or utilized by any one or more of the methodologies or functions described herein. The instructions 1124 may also reside, completely or at least partially, within the main memory 1104 and/or within the processor 1102 during execution thereof by the computer system 1100, with the main memory 1104 and the processor 1102 also constituting machine-readable media 1122.

While the machine-readable medium 1122 is shown in an example embodiment to be a single medium, the term "machine-readable medium" may include a single medium or multiple media (e.g., a centralized or distributed database, and/or associated caches and servers) that store the one or more instructions 1124 or data structures. The term "machine-readable medium" shall also be taken to include any tangible medium that is capable of storing, encoding, or carrying instructions 1124 for execution by the machine and that cause the machine to perform any one or more of the methodologies of the present disclosure, or that is capable of storing, encoding, or carrying data structures utilized by or associated with such instructions 1124. The term "machine-readable medium" shall accordingly be taken to include, but not be limited to, solid-state memories, and optical and magnetic media. Specific examples of machine-readable media 1122 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magnetooptical disks; and compact disc read-only memory (CD-ROM) and digital versatile disc read-only memory (DVD-ROM )disks. A machine-readable medium is not a transmission medium.

### TRANSMISSION MEDIUM

The instructions 1124 may further be transmitted or received over a communications network 1126 using a transmission medium. The instructions 1124 may be transmitted using the network interface device 1120 and any one of a number of well-known transfer protocols (e.g., hypertext transport protocol (HTTP)). Examples of communication networks include a local area network (LAN), a wide area network (WAN), the Internet, mobile telephone networks, plain old telephone (POTS) networks, and wireless data networks (e.g., WiFi and WiMax networks). The term "transmission medium" shall be taken to include any intangible medium that is capable of storing, encoding, or carrying instructions 1124 for execution by the machine, and includes digital or analog communications signals or other intangible media to facilitate communication of such software.

## Claims

1. A method (700, 900) to provide a trusted execution environment, TEE, the method comprising:
pre-initializing (710, 910), by a processor, a pool of TEEs, the pre-initializing of each TEE of the pool of TEEs including allocating memory of a storage device for the TEE;
after the pre-initializing of the pool of TEEs, receiving, by the processor, a request (720, 920); and
in response to the request:
selecting (730, 930), by the processor, a TEE from the pre-initialized pool of TEEs; and
providing (740, 940) access, by the processor, to the selected TEE;
further comprising:
prior to the providing of access to the selected TEE, modifying the selected TEE,
wherein the modifying selected TEE comprises:
modifying the selected TEE based on information in the request (720, 920);
assigning an encryption key to the selected TEE; and
encrypting the memory allocated to the selected TEE using the encryption key;
wherein the encryption key is an ephemeral encryption key,
wherein the encryption key is generated within the processor on boot and never stored outside the processor.

2. The method of claim 1, wherein the modifying of the selected TEE comprises starting the selected TEE.

3. The method of claim 1 or claim 2, wherein the modifying of the selected TEE comprises copying (830) data or code to the allocated memory for the TEE.

4. The method of any one of claims 1 to 3, wherein:
the pre-initializing of the pool of TEEs comprises copying a state of a template TEE to each TEE of the pool of TEEs.

5. The method of claim 4, wherein the template TEE comprises initial memory contents and layout for a function as a service, FaaS.

6. The method of claim 4 or 5, wherein the processor prevents execution of the template TEE.

7. The method of any one of claims 4 to 6, further comprising:
creating the template TEE marked read-only.

8. The method of any one of claims 1 to 7, further comprising:
based on a determination that execution of the selected TEE is complete, restoring the selected TEE to a state of a template TEE.

9. The method of any one of claims 1 to 8, further comprising:
receiving a request (720, 920) to release the selected TEE; and
in response to the request (720, 920) to release the selected TEE, returning the selected TEE to the pool of TEEs.

10. The method of any one of claims 1 to 9, further comprising:
receiving a pre-computed hash value;
determining a hash value of a binary memory state; and
based on the determined hash value and the pre-computed hash value, copying the binary memory state from unsecured memory to the selected TEE.

11. An apparatus comprising means to perform a method as claimed in any preceding claim.

12. A non-transitory computer readable medium having instruction, when executed, to implement a method or realize an apparatus as claimed in any preceding claim.

## Patentansprüche

1. Verfahren (700, 900) zum Bereitstellen einer vertrauenswürdigen Ausführungsumgebung (TEE), wobei das Verfahren Folgendes umfasst:
Vorinitialisieren (710, 910), durch einen Prozessor, eines Pools von TEEs, wobei das Vorinitialisieren jeder TEE des Pools von TEEs das Zuweisen von Speicher einer Speichervorrichtung für die TEE beinhaltet;
nach dem Vorinitialisieren des Pools von TEEs, Empfangen, durch den Prozessor, einer Anfrage (720, 920); und
als Reaktion auf die Anfrage:
Auswählen (730, 930), durch den Prozessor, einer TEE aus dem vorinitialisierten Pool von TEEs; und
Bereitstellen (740, 940) des Zugriffs, durch den Prozessor, auf die ausgewählte TEE;
ferner Folgendes umfassend:
vor dem Bereitstellen des Zugriffs auf die ausgewählte TEE, Modifizieren der ausgewählten TEE,
wobei das Modifizieren der ausgewählten TEE Folgendes umfasst:
Modifizieren der ausgewählten TEE auf der Grundlage der Informationen in der Anfrage (720, 920);
Zuweisen eines Verschlüsselungsschlüssels zu der ausgewählten TEE; und
Verschlüsseln des der ausgewählten TEE zugewiesenen Speichers unter Verwendung des Verschlüsselungsschlüssels;
wobei der Verschlüsselungsschlüssel ein ephemerer Verschlüsselungsschlüssel ist,
wobei der Verschlüsselungsschlüssel beim Hochfahren innerhalb des Prozessors erzeugt und niemals außerhalb des Prozessors gespeichert wird.

2. Verfahren nach Anspruch 1, wobei das Modifizieren der ausgewählten TEE das Starten der ausgewählten TEE umfasst.

3. Verfahren nach Anspruch 1 oder Anspruch 2, wobei das Modifizieren der ausgewählten TEE das Kopieren (830) von Daten oder Code in den zugewiesenen Speicher für die TEE umfasst.

4. Verfahren nach einem der Ansprüche 1 bis 3, wobei: das Vorinitialisieren des Pools von TEEs das Kopieren eines Zustands einer Vorlagen-TEE in jede TEE des Pools von TEEs umfasst.

5. Verfahren nach Anspruch 4, wobei die Vorlagen-TEE ursprüngliche Speicherinhalte und ein Layout für eine Funktion als Dienst (Function as a Service, FaaS) umfasst.

6. Verfahren nach Anspruch 4 oder 5, wobei der Prozessor die Ausführung der Vorlagen-TEE verhindert.

7. Verfahren nach einem der Ansprüche 4 bis 6, das ferner Folgendes umfasst:
Erzeugen der Vorlagen-TEE mit dem Vermerk "schreibgeschützt".

8. Verfahren nach einem der Ansprüche 1 bis 7, das ferner Folgendes umfasst:
basierend auf der Bestimmung, dass die Ausführung der ausgewählten TEE abgeschlossen ist, Wiederherstellen der ausgewählten TEE in einen Zustand einer Vorlagen-TEE.

9. Verfahren nach einem der Ansprüche 1 bis 8, das ferner Folgendes umfasst:
Empfangen einer Anfrage (720, 920) zur Freigabe der ausgewählten TEE; und
als Reaktion auf die Anfrage (720, 920), die ausgewählte TEE freizugeben, Rückgabe der ausgewählten TEE an den TEE-Pool.

10. Verfahren nach einem der Ansprüche 1 bis 9, das ferner Folgendes umfasst:
Empfangen eines vorberechneten Hash-Wertes;
Bestimmen eines Hash-Wertes eines binären Speicherzustands; und
basierend auf dem bestimmten Hash-Wert und dem vorberechneten Hash-Wert, Kopieren des binären Speicherzustands vom ungesicherten Speicher in die ausgewählte TEE.

11. Vorrichtung, die Mittel zum Durchführen eines Verfahrens nach einem der vorangehenden Ansprüche umfasst.

12. Nichtflüchtiges computerlesbares Medium mit einer Anweisung, die, wenn sie ausgeführt wird, ein Verfahren implementiert oder eine Vorrichtung realisiert, wie in einem der vorhergehenden Ansprüche beansprucht.

## Revendications

1. Procédé (700, 900) de mise en place d'un environnement d'exécution de confiance, TEE, le procédé comportant :
la pré-initialisation (710, 910), par un processeur, d'un pool de TEE, la pré-initialisation de chaque TEE du pool de TEE comprenant l'attribution de mémoire d'un dispositif de stockage au TEE ;
après la pré-initialisation du pool de TEE, la réception, par le processeur, d'une demande (720, 920) ; et
en réponse à la demande :
la sélection (730, 930), par le processeur, d'un TEE à partir du pool pré-initialisé de TEE ; et
la mise en place (740, 940), par le processeur, d'un accès au TEE sélectionné ;
comportant en outre :
avant la mise en place de l'accès au TEE sélectionné, la modification du TEE sélectionné,
la modification du TEE sélectionné comportant :
la modification du TEE sélectionné d'après des informations figurant dans la demande (720, 920) ;
l'affectation d'une clé de chiffrement au TEE sélectionné ; et
le chiffrement de la mémoire attribuée au TEE sélectionné à l'aide de la clé de chiffrement ;
la clé de chiffrement étant une clé de chiffrement éphémère,
la clé de chiffrement étant générée à l'intérieur du processeur suite à l'amorçage et jamais stockée à l'extérieur du processeur.

2. Procédé selon la revendication 1, la modification du TEE sélectionné comportant le démarrage du TEE sélectionné.

3. Procédé selon la revendication 1 ou la revendication 2, la modification du TEE sélectionné comportant la copie (830) de données ou de code vers la mémoire attribuée au TEE.

4. Procédé selon l'une quelconque des revendications 1 à 3 :
la pré-initialisation du pool de TEE comportant la copie d'un état d'un TEE modèle vers chaque TEE du pool de TEE.

5. Procédé selon la revendication 4, le TEE modèle comportant un contenu et une disposition initiaux de mémoire pour une fonction en tant que service, FaaS.

6. Procédé selon la revendication 4 ou 5, le processeur empêchant l'exécution du TEE modèle.

7. Procédé selon l'une quelconque des revendications 4 à 6, comportant en outre :
la création du TEE modèle marqué en lecture seule.

8. Procédé selon l'une quelconque des revendications 1 à 7, comportant en outre :
sur la base d'une détermination du fait que l'exécution du TEE sélectionné est terminée, le rétablissement du TEE sélectionné dans un état d'un TEE modèle.

9. Procédé selon l'une quelconque des revendications 1 à 8, comportant en outre :
la réception d'une demande (720, 920) de libération du TEE sélectionné ; et
en réponse à la demande (720, 920) de libération du TEE sélectionné, la restitution du TEE sélectionné au pool de TEE.

10. Procédé selon l'une quelconque des revendications 1 à 9, comportant en outre :
la réception d'une valeur de hachage pré-calculée ;
la détermination d'une valeur de hachage d'un état de mémoire binaire ; et
d'après la valeur de hachage déterminée et la valeur de hachage pré-calculée, la copie de l'état de mémoire binaire d'une mémoire non sécurisée vers le TEE sélectionné.

11. Appareil comportant des moyens servant à réaliser un procédé selon l'une quelconque des revendications précédentes.

12. Support non transitoire lisible par ordinateur comprenant des instructions destinées, lorsqu'elles sont exécutées, à mettre en œuvre un procédé ou à réaliser un appareil selon l'une quelconque des revendications précédentes.
